Europäisches Patentamt

European Patent Office

Office européen des brevets

(19)

(11) Veröffentlichungsnummer: **0 337 301 B1**

# (12) EUROPÄISCHE PATENTSCHRIFT

(45) Veröffentlichungstag der Patentschrift:
03.07.91 Patentblatt 91/27

(51) Int. Cl.⁵: **B65D 33/16**

(21) Anmeldenummer: **89106077.4**

(22) Anmeldetag: **06.04.89**

(54) Verschlussklammer für Wursthüllen und dergleichen.

(30) Priorität: **11.04.88 DE 3811978**

(43) Veröffentlichungstag der Anmeldung:
**18.10.89 Patentblatt 89/42**

(45) Bekanntmachung des Hinweises auf die
Patenterteilung:
**03.07.91 Patentblatt 91/27**

(84) Benannte Vertragsstaaten:
**AT BE CH DE ES FR GB IT LI NL SE**

(56) Entgegenhaltungen:
**DE-A- 1 761 504**
**FR-A- 2 341 498**
**US-A- 3 541 647**

(73) Patentinhaber: **TECHNOPACK EWALD
HAGEDORN KG (GMBH) & CO)
Berzeliusstrasse 87
W-2000 Hamburg 74 (DE)**

(72) Erfinder: **Simon, Dieter
Moorweg 6
W-2057 Reinbek 5 (DE)**

(74) Vertreter: **Glawe, Delfs, Moll & Partner
Patentanwälte
Postfach 162 Liebherrstrasse 20
W-8000 München 26 (DE)**

EP 0 337 301 B1

## Beschreibung

Die Erfindung bezieht sich auf eine Verschlußklammer für Wursthüllen und dergleichen, die von einem um das geraffte Hüllenende zu biegenden Metallstreifen gebildet ist, dessen an dem Hüllenende anliegende Anlagefläche reibungserhöhende Vertiefungen enthält.

Verschlußklammern für Wursthüllen sind als U-förmig gebogene Drahtstücke bekannt, die um die gerafften Hüllenenden herum derart zusammengebogen werden, daß ihre Anlagefläche unter Vorspannung an der Hülle anliegt und durch Reibung darauf gehalten ist. Abgesehen von denjenigen Fällen, in denen man zur Vermeidung eines zu hohen Wursthüllen-Innendrucks eine gewisse Gleitfähigkeit der Klammer auf dem Hüllenende wünscht, strebt man meist einen so sicheren Sitz der Klammer an, daß diese sich nicht verschieben kann. Da Wursthüllen oftmals empfindlich sind, kann dieses Ziel nicht einfach durch Erhöhung der Klammervorspannung erreicht werden. Auch kann die weiche Struktur und die Anwesenheit schmierender Stoffe, insbesondere Fett, den festen Klammersitz stören.

Bekannt ist es, die Anlagefläche der Klammer mit einer oder mereren Längsnuten zu versehen (US-A 3 541 647 ; DE-A 1 761 504 ; FR-A 2 341 498). Jedoch hat sich gezeigt, daß dadurch auch kein sichererer Sitz erzielbar ist, was damit zusammenhängen mag, daß die Nut als Schmiertasche wirkt. Erschwerend kommt hinzu, daß die auf die Wursthülle einwirkenden Kanten der Verschlußklammern zur Vermeidung von Beschädigung bekanntlich gut abgerundet sein müssen (auch wenn dies in schematischer Darstellung nicht immer zum Ausdruck kommt).

Der Erfindung liegt die Aufgabe zugrunde, die Haftfähigkeit von Verschlußklammern zu verbessern.

Die erfindungsgemäße Lösung besteht darin, daß in der Anlagefläche eine Vielzahl von Vertiefungen im wesentlichen flächendeckend und einander überkreuzend vorgesehen ist.

Diese Lösung ist insofern überraschend, als die mit einer Längsnut gemachten Erfahrungen nicht dafür sprechen, daß durch Vertiefungen eine Verbesserung der Haftfähigkeit erzielbar ist. Jedoch hat sich gezeigt, daß erfindungsgemäß ausgebildete Verschlußklammern eine wesentlich bessere Haftfestigkeit als die bekannten, mit Nuten versehenen Verschlußklammern aufweisen, so daß die bekannten Klammern im allgemeinen durch erfindungsgemäße Klammern geringerer Stärke ersetzt werden können, bei denen die Größe der Anlagefläche und die Größe der Vorspannung entsprechend geringer sind.

Die bessere Wirkung der erfindungsgemäßen Klammern beruht wahrscheinlich nicht nur darauf, daß eine größere Zahl von mit der Hülle zusammenwirkenden Kanten in der Anlagefläche zur Verfügung gestellt wird, sondern auch darauf, daß diese Kanten schärfer sein können. Je dichter nämlich die Vertiefungen angeordnet sind und je geringer die einzelne Vertiefungsbreite ist, umso geringer ist die Gefahr, daß jede einzelne Kante gefährlich tief in die Hüllenoberfläche einschneidet, ohne daß dadurch aber die reibungsverbessernde Wirkung der Kantenschärfe beeinträchtigt wird. Ferner mag die erfindungsgemäß erzielte Verbesserung damit zusammenhängen, daß ein Dräneffekt erzielt wird, durch den gleitfördernde Schmierstoffe unter dem Anlagedruck herausgepreßt werden, so daß der Festkörperkontakt zwischen Klammer und Hülle vermehrt wird. Er kommt dadurch zustande, daß im Falle der Verstopfung eines Abflußquerschnitts auch noch andere Abflußwege zur Verfügung stehen, die mit dem verstopften Abflußweg an der Überkreuzungsstelle verbunden sind.

Unter der flächendeckenden Anordnung der Vielzahl von Vertiefungen ist vorzugsweise zu verstehen, daß die Länge der von den Vertiefungen gebildeten Kanten je Längeneinheit des Metallstreifens wenigstens etwa drei Längeneinheiten, vorzugsweise wenigstens 5 Längeneinheiten beträgt. Eine Längsnut stellt demgegenüber nur eine Kantenlänge von zwei Längeneinheiten je Längeneinheit des Metallstreifens zur Verfügung.

Ferner ist es in dieser Hinsicht zweckmäßig, wenn die Länge der von den Vertiefungen gebildeten Kanten im Mittel wenigstens etwa 2 mm/mm$^2$, vorzugsweise mindestens etwa 3 mm/mm$^2$, beträgt. Ferner kann es zweckmäßig sein, wenn der von den Vertiefungen eingenommene Anteil der Anlagefläche wenigstens etwa 20% beträgt.

Die Kanten der Vertiefungen sollen – im Gegensatz zur bisher geltenden Regel – scharf ausgebildet sein. Während die Breite der Kantenrundung in der Draufsicht auf die Anlagefläche bei Verschlußklammern mit der bekannten Längsnut nicht weit unter 0,1 mm liegt, soll diese Breite im Falle der Erfindung weniger als 0,05 mm, zweckmäßigerweise weniger als 0,02 mm, betragen. Diese Breite ist unter der Lupe oder dem Mikroskop leicht anhand des unterschiedlichen Glanzes der genannten Flächen festzustellen. Die Breite der Kantenrundung soll in der Draufsicht auch weniger als 10% der Vertiefungsbreite betragen.

Besonders günstig ist es, wenn die Kanten gegenüber der ursprünglichen und in Abstand von den Vertiefungen vorhandenen Höhe der Anlagefläche aufgeworfen sind, wie es dann der Fall ist, wenn die Vertiefungen in das Material eingedrückt werden und dadurch Material seitlich verdrängt wird. Daher zeichnet sich ein erfindungsgemäß bevorzugtes Verfahren zum Herstellen der Verschlußklammern dadurch aus, daß die Vertiefungen in den zur Herstellung der Klammern dienenden, quasi endlosen Metallstreifen eingedrückt werden, beispielsweise mittels eines Rändelrades.

Zweckmäßigerweise sind die Vertiefungen langgestreckt ausgebildet. Während man bei der Konzeption der bekannten Nut davon ausging, daß diese quer zu der zu verhindernden Rutschbewegung und also in Längsrichtung der Klammer verlaufen müsse, hat sich gezeigt, daß dies wenigstens für die erfindungsgemäßen Vertiefungen nicht gilt, wenngleich es günstig sein kann, ihnen eine beträchtliche Richtungskomponente in Längsrichtung zu geben. Jedoch wirken auch quer zur Längsrichtung der Klammern – also in Richtung der zu verhindernden Gleitbewegung der Klammern – verlaufende, langgestreckte Vertiefungen günstig. Dies mag damit zusammenhängen, daß seitlich aus der Anlagefläche herausführende, langgestreckte Vertiefungen einen Dräneffekt im Anlagebereich haben.

Es hat sich bewährt, wenn die Breite im Mittel über 0,15 mm, andererseits aber zweckmäßigerweise auch unter 0,4 mm liegt.

Wenn die Vertiefungen als Dränquerschnitte wirken sollen, sollte ihre Tiefe nicht wesentlich geringer sein als ihre halbe Breite. Ansonsten genügt es, wenn die Tiefe der Vertiefungen hinreicht zu deutlicher Kantenbildung.

Die Erfindung wird im folgenden näher unter Bezugnahme auf die Zeichnung erläutert, die vorteilhafte Ausführungsbeispiele veranschaulicht. Darin zeigen :

Fig. 1 und 2 eine Seitenansicht und Schnittansicht der Verschlußklammer in vergrößertem Maßstab,

Figur 3 bis 10 Mustervariationen der erfindungsgemäßen Vertiefungen und

Figur 11 bis 13 Kantenquerschnitte.

Die Querschnittsgestalt des Streifens aus beispielsweise Aluminium, aus dem die Klammern gebogen sind, ist in dem dargestellten Beispiel so gewählt, daß sich eine abgeflachte Anlagefläche 1 bildet, die zwischen Kantenrundungen 2 liegt. Die ebene Gestalt der Anlagefläche ist im Zusammenhang der Erfindung vorteilhaft, aber nicht notwendig.

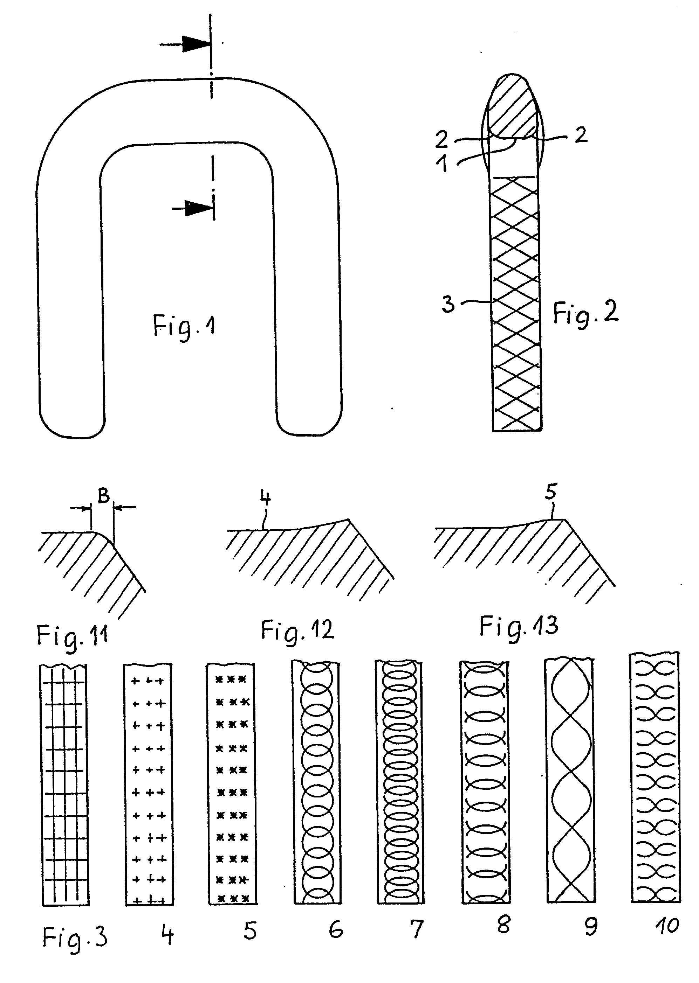

Typische Längen- und Breitenabmessungen der in Fig. 1 und 2 gezeigten Verschlußklammern, wie sie zum Verschließen von Wursthüllen verwendet werden, liegen zwischen 10 und 20 mm. Die Erfindung ist auf die Anwendung innerhalb dieses Bereiches nicht beschränkt.

Fig. 2 zeigt, daß auf der Anlagefläche des Schenkels 3 ein Muster von sich überkreuzenden Vertiefungslinien gebildet ist. Zweckmäßigerweise bedeckt dies die Anlagefläche auch an den zwischen den Schenkeln sich erstreckenden Steg einschließlich der Biegungsbereiche.

Das Muster gemäß Fig.2 setzt sich aus Vertiefungslinien zusammen, die unter 60° zur Längsrichtung des Metallstreifens verlaufen und einander überkreuzen, wobei je Vertiefungslinie mindestens ein Überkreuzungspunkt zweckmäßigerweise innerhalb der Anlagefläche liegen sollte.

Bei einem mit gutem Ergebnis erprobten Ausführungsbeispiel kennzeichnete sich das Vertiefungsmuster durch folgende Daten :

– Breite jeder Vertiefunglinie : 0,15 bis 0,3 mm
– Querschnittsform der Vertiefungen : dreieckig spitz, mit 90° spitzem Winkel am Vertiefungsgrunde
– Schenkelbreite : 2,5 mm
– Breite der Anlagefläche : 1,8 mm
– Winkel der Vertiefungslinien zur Schenkellängsrichtung : 60°
– Mittenabstand paralleler Vertiefungslinien : 1 mm
– je ein Kreuzungspunkt innerhalb der Anlagefläche
– Kantenausbildung : überwiegend gemäß Fig. 13
– Kantenrundung : bei 25-facher Vergrößerung nicht erkennbar
– Rutschfestigkeit : dieselbe wie die einer herkömmlichen Klammer von 3 mm Breite und etwa 1,5-fachem Gewicht.

Die meisten Ausführungen gemäß Fig. 3 bis 10 erklären sich selbst, wobei bei den Ausführungen gemäß Fig. 3, 8 und 10 Wert darauf gelegt ist, daß sich die Vertiefungslinien am Rand der Anlagefläche öffnen, um Dränwirkung zu erzeugen. Die Ausführungen gemäß Fig. 4 und 5 zeigen punktähnlich konzentrierte Vertiefungen, die von mehreren einander sternartig kreuzenden, kurzen Vertiefungsstrecken gebildet sind. Bei diesen läßt sich die Länge der von ihnen gebildeten, wirksamen Kante ebenso ermitteln wie bei den linienförmig ausgeprägten Vertiefungen.

Während bei der herkömmlichen Längsnut eine Kantenrundung beträchtlichen Ausmaßes, wie sie bei B in Fig. 11 dargestellt ist, weder vermeidbar noch im Hinblick auf die Schonung unerwünscht ist, erzielt man durch Einprägung der Vertiefungen, beispielsweise mittels Rändelrades, eine Kante der in Fig. 12 gezeigten Form, in der der Rand ein wenig aufgeworfen ist über die sonstige Höhe 4 der Anlagefläche 1.

Auch wenn durch nachfolgende Bearbeitung ungewollt oder zur Vermeidung allzu scharfer Kanten anschließend eine Abflachung 5 durchgeführt wird, bleibt doch eine Kante von wesentlich schärferer Form als im Stand der Technik bestehen.

**Ansprüche**

1. Verschlußklammer für Wursthüllen und dergleichen, die von einem um das geraffte Hüllenende zu biegenden Metallstreifen gebildet ist, dessen an dem Hüllenende anliegende Anlagefläche reibungserhöhende Vertiefungen enthält, dadurch gekennzeichnet, daß eine Vielzahl von Vertiefungen im wesentlichen flächendeckend und einander überkreuzend vorgesehen ist.

2. Klammer nach Anspruch 1, dadurch gekennzeichnet, daß die Länge der von den Vertiefungen gebildeten Kanten je Längeneinheit des Metallstreifens wenigstens etwa drei Längeneinheiten beträgt.

3. Klammer nach Anspruch 2, dadurch gekennzeichnet, daß die Länge der von den Vertiefungen gebildeten Kanten je Längeneinheit des Metallstreifens wenigstens etwa fünf Längeneinheiten beträgt.

4. Klammer nach einem der Ansprüche 1 bis 3, dadurch gekennzeichnet, daß die Länge der von den Vertiefungen gebildeten Kanten im Mittel wenigstens etwa 2 mm/mm² beträgt.

5. Klammer nach einem der Ansprüche 1 bis 4, dadurch gekennzeichnet, daß der von den Vertiefungen eingenommenen Anteil der Anlagefläche wenigstens etwa 20 % ist.

6. Klammer nach einem der Ansprüche 1 bis 5, dadurch gekennzeichnet, daß die Kanten scharf ausgebildet sind.

7. Klammer nach Anspruch 6, dadurch gekennzeichnet, daß die Breite der Kantenrundung (B) in der Draufsicht auf die Anlagefläche (1) weniger als 0,05 mm beträgt.

8. Klammer nach Anspruch 6, dadurch gekennzeichnet, daß die Breite (B) der Kantenrundung in der Draufsicht weniger als 10% der Vertiefungsbreite beträgt.

9. Klammer nach einem der Ansprüche 1 bis 8, dadurch gekennzeichnet, daß die Kanten aufgeworfen (Fig. 12 und 13) sind.

10. Klammer nach einem der Ansprüche 1 bis 9, dadurch gekennzeichnet, daß es sich um eingedrückte Vertiefungen handelt.

11. Klammer nach einem der Ansprüche 1 bis 10, dadurch gekennzeichnet, daß die Vertiefungen langgestreckt ausgebildet sind.

12. Klammer nach einem der Ansprüche 1 bis 11, dadurch gekennzeichnet, daß die Breite der Vertiefungen im Mittel über 0,15 mm liegt.

13. Klammer nach einem der Ansprüche 1 bis 12, dadurch gekennzeichnet, daß die Breite der Vertiefungen im Mittel unter 0,4 mm liegt.

14. Klammer nach einem der Ansprüche 11 bis 13, dadurch gekennzeichnet, daß die Vertiefungen seitlich aus der Anlagefläche (1) herausführen.

15. Verfahren zur Herstellung einer Verschlußklammer nach Anspruch 1 für Wursthüllen und dergleichen aus einem quasi endlosen, reibungserhöhende Vertiefungen aufweisenden Metallstreifen, dadurch gekennzeichnet, daß die Vertiefungen in den Metallstreifen eingedrückt werden.

## Claims

1. Sealing clasp for sausage skins and the like, formed from a metal strip which is to be bent round the gathered end of the skin, its contact surface, which is in contact with the end of the skin, containing friction-increasing indentations, characterised in that a plurality of indentations is provided, covering the whole surface in a criss-cross pattern.

2. Clasp according to claim 1, characterised in that the length of the edges formed by the indentations per length unit of the metal strip amounts to at least about three length units.

3. Clasp according to claim 2, characterised in that the length of the edges formed by the indentations per length unit of the metal strip amounts to at least about five length units.

4. Clasp according to one of claims 1 to 3, characterised in that the mean length of the edges formed by the indentations amounts to at least about 2 mm/mm².

5. Clasp according to one of claims 1 to 4, characterised in that the proportion of the contact surface taken up by the indentations amounts to at least about 20%.

6. Clasp according to one of claims 1 to 5, characterised in that the edges are formed as sharp.

7. Clasp according to claim 6, characterised in that the width (B) of the rounded edge in a plan view of the contact surface (1) is less than 0.05 mm.

8. Clasp according to claim 6, characterised in that the width (B) of the rounded edge in plan view amounts to less than 10% of the indentation width.

9. Clasp according to one of claims 1 to 8, characterised in that the edges are raised (figs 12 and 13).

10. Clasp according to one of claims 1 to 9, characterised in that the indentations are impressed.

11. Clasp according to one of claims 1 to 10, characterised in that the indentations extend lengthwise.

12. Clasp according to one of claims 1 to 11, characterised in that the mean width of the indentations is greater than 0.15 mm.

13. Clasp according to one of claims 1 to 12, characterised in that the mean width of the indentations is less than 0.4 mm.

14. Clasp according to one of claims 11 to 13, characterised in that the indentations lead off towards the sides of the contact surface (1).

15. Method for producing a sealing clasp according to claim 1 for sausage skins and the like from a virtually endless metal strip with friction-increasing indentations, characterised in that the indentations are impressed onto the metal strip.

## Revendications

1. Agrafe de fermeture pour enveloppes de saucisson ou similaires, constituée par un ruban de métal qui est destiné à être replié autour de l'extrémité serrée de l'enveloppe et dont la surface de contact s'appliquant sur l'extrémité de l'enveloppe contient des empreintes augmentant le frottement, caractérisée en ce qu'il est prévu une multiplicité d'empreintes qui couvrent pratiquement la surface et se croisent entre elles.

2. Agrafe selon la revendication 1, caractérisée en ce que par unité de longueur du ruban de métal, la longueur des arêtes formées par les empreintes est au moins égale à trois unités de longueur environ.

3. Agrafe selon la revendication 2, caractérisée en ce que par unité de longueur du ruban de métal, la longueur des arêtes formées par les empreintes est au moins égale à cinq unités de longueur environ.

4. Agrafe selon l'une quelconque des revendications 1 à 3, caractérisée en ce qu'en moyenne, la longueur des arêtes formées par les empreintes est au moins égale à 2 mm/mm².

5. Agrafe selon l'une quelconque des revendications 1 à 4, caractérisée en ce que la part de la surface de contact occupée par les empreintes est d'au moins 20% environ.

6. Agrafe selon l'une quelconque des revendications 1 à 5, caractérisée en ce que les arêtes sont réalisées sous forme d'arêtes vives.

7. Agrafe selon la revendication 6, caractérisée en ce que la largeur de l'arrondi (B) des arêtes en une vue de dessus de la surface de contact (1) s'élève à moins de 0,05 mm.

8. Agrafe selon la revendication 6, caractérisée en ce que la largeur (B) de l'arrondi des arêtes en une vue de dessus s'élève à moins de 10% de la largeur des empreintes.

9. Agrafe selon l'une quelconque des revendications 1 à 8, caractérisée en ce que les arêtes sont surélevées (fig. 12 et 13).

10. Agrafe selon l'une quelconque des revendications 1 à 9, caractérisée en ce qu'il s'agit d'empreintes poinçonnées.

11. Agrafe selon l'une quelconque des revendications 1 à 10, caractérisée en ce que les empreintes sont réalisées sous forme très allongée.

12. Agrafe selon l'une quelconque des revendications 1 à 11, caractérisée en ce que la largeur des empreintes se situe en moyenne au-dessus de 0,15 mm.

13. Agrafe selon l'une quelconque des revendications 1 à 12, caractérisée en ce que la largeur des empreintes se situe en moyenne au-dessous de 0,4 mm.

14. Agrafe selon l'une quelconque des revendications 11 à 13, caractérisée en ce que les empreintes sortent latéralement de la surface de contact (1).

15. Procédé de fabrication d'une agrafe de fermeture selon la revendication pour enveloppes de saucisson ou similaires, à partir d'un ruban de métal quasiment sans fin comportant des empreintes destinées à augmenter le frottement, caractérisé en ce que les empreintes dans le ruban de métal sont formées par poinçonnage.

Fig. 1

Fig. 2

Fig. 11

Fig. 12

Fig. 13

Fig. 3    4    5    6    7    8    9    10